# EUROPEAN PATENT SPECIFICATION

(11) **EP 3 670 562 B1**
(45) Date of publication and mention of the grant of the patent: **08.03.2023**
(21) Application number: 19217664.2
(22) Date of filing: 18.12.2019
(51) Int. Cl.: C08G 18/69, C08G 18/76, C08G 18/12, C08G 18/42, C09J 175/04

(54) **REACTIVE HOT-MELT ADHESIVE HAVING GOOD ADHESION TO BOTH POLAR AND NON-POLAR SUBSTRATES**
REAKTIVER SCHMELZKLEBSTOFF MIT GUTER HAFTUNG AUF SOWOHL POLAREN ALS AUCH NICHTPOLAREN SUBSTRATEN
ADHÉSIF THERMOFUSIBLE RÉACTIF PRÉSENTANT UNE BONNE ADHÉRENCE AUX SUBSTRATS POLAIRES ET NON POLAIRES

(30) Priority: 21.12.2018 EP 18215639
(43) Date of publication of application: 24.06.2020
(73) Proprietor: SIKA TECHNOLOGY AG, 6340 Baar (CH)
(72) Inventor: Schmider, Martin, 21335 Lüneburg (DE); Janke, Doreen, 25486 Alveslohe (DE); Paschkowski, Kai, 21635 Jork (DE)
(74) Representative: Sika Patent Attorneys

(56) References cited:
- EP-A1- 1 731 658
- EP-A2- 0 149 557
- EP-A2- 0 383 505
- WO-A1-2018/086029
- WO-A2-2011/068847
- JP-A- H11 323 301
- JP-A- 2004 010 809
- JP-A- 2006 169 504
- JP-A- 2010 053 283
- JP-A- 2012 214 613
- JP-A- 2013 216 750
- US-A1- 2003 220 457
- US-A1- 2018 298 254
- US-B1- 6 448 193
- US-B1- 6 635 711

## Description

### Technical field

The invention relates to reactive hot-melt adhesives having good bonding on both polar and non-polar substrates and to use of adhesives as an assembly adhesive, a laminating adhesive, or as an adhesive for the building of sandwich elements, in particular in automotive industry.

### Background of the invention

Hot-melt adhesives are solvent free adhesives, which are solid at room temperature and which are applied to the substrate to be bonded in form of a melt. After cooling the adhesive solidifies and forms an adhesive bond with the substrate through physically occurring bonding. Conventional hot-melt adhesives are non-reactive adhesives, which soften again upon heating and are, therefore, not suitable to be used at elevated temperatures. Reactive hot-melt adhesives contain polymers with reactive groups that enable chemical curing of the adhesive, for example, by crosslinking of the polymer chains. Due to the cured polymer matrix the reactive hot-melts do not soften upon heating and these adhesives are, therefore, suitable for use also at elevated temperatures. The chemical curing of the polymers can be initiated, for example, by heating or exposing the adhesive composition to water. Moisture curing hot-melt adhesives typically contain polymers functionalized with isocyanate or silane groups, which enable the crosslinking of the polymer chains upon contact with water, in particular with atmospheric moisture.

Typical reactive hot-melt adhesives used in the automotive industry as assembly adhesives include moisture curing polyurethane- and polyolefin-based hot melt adhesives. Moisture curing polyurethane hot-melt (PUR-RHM) adhesives consist mainly of isocyanate-terminated polyurethane prepolymers, which have been obtained by reacting suitable polyols, typically diols, with a stoichiometric excess of polyisocyanates, typically diisocyanates. When contacted with water the residual isocyanate groups of the polyurethane prepolymers form carbamic acid, which is unstable and decomposes into an amine and carbon dioxide. The amine reacts rapidly with other isocyanate groups to form urea linkages. State-of-the-Art PUR-RHM adhesives typically have the disadvantage of having a poor adhesion on non-polar substrates such as polypropylene, polyethylene, and polystyrene. Patent application EP 3 679 107 A1 discloses a moisture curing polyurethane hot-melt adhesive having good bonding on polar substrates. The adhesive composition comprises a polyurethane pre-polymer and an adhesion promotor obtained from reaction of at least one monoisocyanate and at least one isocyanate-reactive silane. In case these adhesives are used for bonding of non-polar substrates these have to be treated with a primer, which significantly increases the application costs.

Reactive and non-reactive polyolefin hot-melt adhesives, in particular the ones based on amorphous poly-α-olefins (APAO), have highly non-polar properties and are, therefore, in principle suitable for bonding of non-polar substrates without pre-treatment with primer compositions. Reactive polyolefin hot-melt adhesives (PO-RHM), such as moisture curing polyolefin hot-melt adhesives typically consist mainly of poly-α-olefins, which have been functionalized with silane groups. When contacted with water, the silane groups of the polyolefin polymers, such as methoxysilane groups, react with water to form silanols, which subsequently undergo reaction with other silanol groups to form covalent bonds between individual polymer molecules as part of a condensation reaction. Patent application EP 2 917 296 B1 discloses a reactive polyolefin hot-melt adhesive that is especially suitable for in vacuum deep draw lamination. The adhesive composition comprises at 25 °C solid silane-functionalized poly-α-olefin, paraffin wax, and 5-12 wt.-% of additional waxy components. State-of-the-Art reactive and non-reactive polyolefin hot-melt adhesives typically have the disadvantage of having a relatively poor adhesion on polar substrates, such as PMMA, PA, PC, and ABS.

There is thus a need for a novel type of reactive hot-melt adhesive, which provides good bonding on both polar and non-polar substrates, which have not been pre-treated with primer compositions.

### Summary of the invention

The object of the present invention is to provide a moisture curing adhesive composition, which overcomes or at least mitigates the disadvantages of the prior art moisture curing hot-melt adhesives as discussed above.

In particular, it is an object of the present invention to provide a moisture curing adhesive composition, which provides good bonding on both polar and non-polar substrates without the use of primer compositions.

Another objective of the present invention is to provide a moisture curing adhesive composition, which can be produced with lower production costs than State-of-the-Art moisture curing polyurethane based hot-melt adhesives.

The subject of the present invention is an adhesive composition as defined in claim 1.

It was surprisingly found out that a novel type of "hybrid" hot-melt adhesive composition comprising a mixture of a non-reactive polyolefin adhesive and a reactive polyurethane hot-melt adhesive provides sufficient bonding on both non-polar and polar adhesives. Furthermore, it was surprisingly found out that substantial amounts of the non-reactive polyolefin hot-melt adhesive can be admixed with the reactive polyurethane hot-melt adhesive without having a negative impact on application related properties such as open time and green strength of the adhesive composition.

Other aspects of the present invention are presented in other independent claims. Preferred aspects of the invention are presented in the dependent claims.

### Detailed description of the invention

The subject of the present invention is an adhesive composition comprising:
a) 5 - 50 wt.-% of at least one non-functionalized poly-α-olefin **P** and
b) 20 - 70 wt.-% of a reaction product **RP** obtainable by a method comprising steps of reacting at least one first polyol with at least one polyisocyanate wherein the NCO/OH ratio is above 1.5 and reacting the thus obtained reaction mixture with at least one second polyol different from the at least one first polyol, and
c) Optionally at least one at 25 °C liquid polyolefin resin **PR,** and
d) Optionally at least one polyolefin wax **PW,** said proportions of a) and b) being based on the total weight of the adhesive composition,
wherein the at least one non-functionalized poly-α-olefin **P** is a non-functionalized amorphous poly-α-olefin and the at least one first polyol is a hydroxyl-terminated polybutadiene.

The prefix "poly" in substance designations such as "polyol" or "polyisocyanate" refers to substances which in formal terms contain two or more per molecule of the functional group that occurs in their designation. A polyol, for example, is a compound having two or more hydroxyl groups, and a polyisocyanate is a compound having two or more isocyanate groups.

The term "α-olefin" designates an alkene having the molecular formula CₓH₂ₓ (x corresponds to the number of carbon atoms), which features a carbon-carbon double bond at the first carbon atom (α-carbon). Examples of α-olefins include ethylene, propylene, 1-butene, 2-methyl-1-propene (isobutylene), 1-pentene, 1-hexene, 1-heptene and 1-octene. For example, neither 1 ,3-butadiene, nor 2-butene, nor styrene are referred as "α-olefins" according to the present disclosure.

The term "polyolefin wax" designates low molecular weight polymers of linear or branched olefins having from 2 to 30 carbon atoms. They include both homopolymers and copolymers of the above mentioned linear or branched olefins. Polyolefin waxes can be obtained by thermal decomposition of polyolefin plastics, in particular polyethylene plastic, or by direct polymerization of olefins. Suitable polymerization processes for the production of polyolefin waxes include, for example, free-radical processes, where α-olefins, for example, ethylene, are reacted at high pressures and temperatures to give more or less branched waxes and as well as processes, where ethylene and/or higher α-olefins, in particular propylene, are polymerized in the presence of metalorganic catalysts, for example Ziegler-Natta or metallocene catalyst, to give unbranched or branched waxes. Generally, polyolefin waxes have a semicrystalline structure at solid state.

The term "monomer" designates a molecule having at least one polymerizable group. A monomeric di- or polyisocyanate contains in particular no urethane groups. Oligomers or polymer products of diisocyanate monomers such as adducts of monomeric diisocyanates are not monomeric diisocyanates. The monomeric di- or polyisocyanate has in particular an average molecular weight of not more than 1'000 g/mol, preferably not more than 500 g/mol, and more preferably not more than 400 g/mol.

The term "prepolymer" designates a polymer, which contains at least one, usually two or more, reactive group(s), for example isocyanate groups. By way of the reactive groups, the prepolymer may be chain-extended, crosslinked or coupled.

The term "functionalized polymer" designates polymers which are chemically modified so as to contain a functional group on the polymer backbone. In contrast, the term "non-functionalized polymer" designates polymers which are not chemically modified so as to contain functional groups such as epoxy, silane, sulfonate, amide, or anhydride group on the polymer backbone.

The term "polyurethane polymer" designates polymers prepared by the so called diisocyanate polyaddition process. These also include those polymers which are virtually or entirely free from urethane groups. Examples of polyurethane polymers are polyether-polyurethanes, polyester-polyurethanes, polyether-polyureas, polyureas, polyester-polyureas, polyisocyanurates and polycarbodiimides.

The term "polyurethane prepolymer" designates polyurethane polymers comprising one or more unreacted isocyanate groups. The polyurethane prepolymers can be obtained by reacting excess of polyisocyanates with polyols and they are polyisocyanates themselves. The terms "isocyanate-functional polyurethane polymer" and "polyurethane prepolymer" are used interchangeably.

The term "molecular weight" designates the molar mass (g/mol) of a molecule or a part of a molecule, also referred to as "moiety". The term "average molecular weight" designates the number average molecular weight (Mₙ) of an oligomeric or polymeric mixture of molecules or moieties. The number average molecular weight (Mₙ) can be determined by gel permeation chromatography (GPC) with a polystyrene standard.

The term "average OH-functionality" designates the average number of hydroxyl (OH) groups per molecule. The average OH-functionality of a compound can be calculated based on the number average molecular weight (Mₙ) and the hydroxyl number of the compound. The hydroxyl number of a compound can be determined by using method as defined in DIN 53 240-2 standard.

The term "softening point" or "softening temperature" designates a temperature at which compound softens in a rubber-like state, or a temperature at which the crystalline portion within the compound melts. The softening point can be measured by a Ring and Ball method according to DIN EN 1238 standard.

The term "open time" designates the length of a time period during which an adhesive applied to a surface of a substrate is still able to form an adhesive bond after being contacted with another substrate.

The "amount of at least one component X" in a composition, for example "the amount of the at least one polyol" refers in the present document to the sum of the individual amounts of all polyols contained in the composition. For example, in case the at least one polyol is a polyester polyol and the composition comprises 20 wt.-% of at least one polyol, the sum of the amounts of all polyester polyols contained in the composition equals 20 wt.-%.

The term "room temperature" refers to a temperature of ca. 23 °C.

The adhesive composition of the present invention can be characterized as a "hybrid hot-melt adhesive" comprising a non-reactive part based on non-functionalized poly-α-olefins and a reactive part based on isocyanate-functional polyurethane polymers. The term "non-functionalized poly-α-olefin" designates in the present disclosure poly-α-olefins, which do not contain functional groups such as epoxy-, silane-, sulfonate-, amide-, or anhydride- groups on the polymer backbone.

Due to the presence of the at least one non-functionalized poly-α-olefin **P,** the adhesive composition provides good adhesion to non-polar substrates whereas the reactive part based on a moisture curing polyurethane prepolymers provides good adhesion to polar substrates. The amount of the at least one non-functionalized poly-α-olefin **P** in the adhesive composition is not particularly restricted. However, since this constituent is non-reactive and it has a high viscosity, its amount cannot be freely increased without having some impact on the mechanical properties of the hybrid hot-melt adhesive composition before and after curing. Preferably, the at least one non-functionalized poly-α-olefin **P** is present in the adhesive composition in an amount of 5 - 50 wt.-%, more preferably 10 - 45 wt.-%, based on the total weight of the adhesive composition. According to one or more embodiments, the at least one non-functionalized poly-α-olefin **P** is present in the adhesive composition in an amount of 15 - 45 wt.-%, preferably 15 - 40 wt.-%, more preferably 15 - 35 wt.-%, based on the total weight of the adhesive composition.

The at least one non-functionalized poly-α-olefin **P** is preferably a at 25 °C solid non-functionalized poly-α-olefin. Suitable at 25 °C solid poly-α-olefins include, for example, homopolymers, copolymers, and terpolymers of monomers selected from the group consisting of ethylene, propylene, 1-butene and higher α-olefins. According to one or more embodiments, the at least one non-functionalized poly-α-olefin **P** has a softening point measured by Ring and Ball method according to DIN EN 1238 standard in the range of 60 - 200 °C, preferably 70 - 180 °C, more preferably 80 - 160°C, even more preferably 85 - 150 °C and/or a number average molecular weight (Mₙ) in the range of 1'500 - 100'000 g/mol, preferably 1'500 - 50'000 g/mol, more preferably 3'000 - 25'000 g/mol.

According to one or more embodiments, the at least one non-functionalized poly-α-olefin **P** is a at 25 °C solid non-functionalized amorphous poly-α-olefin (APAO). The term "amorphous" refers to polymers having a very low crystallinity degree determined by differential scanning calorimetry (DSC) measurements. According to one or more embodiments, the at least one non-functionalized poly-α-olefin **P** is a non-functionalized amorphous poly-α-olefin having a heat of fusion (Hf) as determined by DSC measurements of not more than 35 J/g, preferably not more than 30 J/g, more preferably not more than 25 J/g. According to one or more embodiments, the at least one non-functionalized poly-α-olefin **P** is a non-functionalized amorphous poly-α-olefin lacking a crystalline melting point (Tₘ) as determined by DSC measurements.

Examples of suitable amorphous non-functionalized poly-α-olefins include amorphous atactic polypropylene, amorphous propylene-ethylene copolymer, amorphous propylene-butene copolymer, amorphous propylene-hexene copolymer, and amorphous propylene-ethylene-butene terpolymer. Amorphous poly-α-olefins are known to a person skilled in the art and they can be obtained, for example, by polymerization of α-olefins in the presence of a polymerization catalyst, such as a Ziegler-Natta catalyst or a metallocene catalyst or any other single-site catalyst.

According to one or more embodiments, the at least one non-functionalized poly-α-olefin **P** is a non-functionalized amorphous poly-α-olefin having a number average molecular weight (Mₙ) in the range of 1 '500 - 50'000 g/mol, preferably 3'000 - 25'000 g/mol and/or a softening point measured by Ring and Ball method according to DIN EN 1238 in the range of 60 - 180 °C, preferably 70 - 160 °C, more preferably 80 - 140 °C and/or a melt viscosity measured according to DIN 53019 standard at 190 °C using a rotational viscometer of not more than 150'000 MPa s, preferably not more than 125'000 MPa s, in particular in the range of 1'000 - 100'000 MPa s, preferably 2'500 - 75'000 MPa·s and/or a heat of fusion (Hf) as determined by DSC measurements of not more than 35 J/g, preferably not more than 30 J/g, more preferably not more than 25 J/g and/or a xylene cold soluble content (XCS) determined at 25 °C according ISO 16152-2005 standard of at least 80 wt.-%, preferably at least 90 wt.-%, more preferably at least 95 wt.-%. The melt viscosity of the at least one non-functionalized amorphous poly-α-olefin is preferably determined according to DIN 53019 standard by busing a rotational viscometer at 5 revolutions per minute using a Brookfield DV-2 Thermosel viscometer with a spindle No. 27.

Suitable non-functionalized amorphous poly-α-olefins are commercially available, for example, from Evonik Industries under the trade name of Vestoplast^{®}, from Eastman Corporation under the trade name of Eastoflex^{®}, and from REXtac LLC under the trade name of REXtac^{®}.

The adhesive composition of the present invention further comprises a reaction product **RP** obtainable by using a multi-step, such as a two-step, preparation method. The term "NCO/OH ratio" designates in the present disclosure the molar ratio of isocyanate groups of isocyanate-group containing compounds to the hydroxyl groups of hydroxyl-group containing compounds. The reaction product **RP** is obtained by a multi-step method comprising steps of reacting at least one first polyol and at least one polyisocyanate wherein the NCO/OH ratio is above 1.5 and reacting the thus obtained reaction mixture with at least one second polyol different from the at least one first polyol. The reaction product **RP** comprises all reaction products that are produced in the reactions between hydroxyl-group containing compounds and isocyanate-group containing compounds, including primarily isocyanate-functional polyurethane prepolymers and any unconverted polyisocyanates. For example, if the reaction mixture obtained in the first step of the multi-step method comprises further non-reactive compounds, such as non-functionalized waxes or non-functionalized polyolefin resins, these are not considered to form a part of the reaction product **RP** obtained in the second step of the multi-step method.

Preferably, the reaction product **RP** is present in the adhesive composition in an amount of 20 - 70 wt.-%, more preferably 20 - 65 wt.-%, even more preferably 25 - 60 wt.-%, based on the total weight of the adhesive composition. According to one or more embodiments, the reaction product **RP** is present in the adhesive composition in an amount of 25 - 55 wt.-%, preferably 25 - 50 wt.-%, more preferably 30 - 50 wt.-%, based on the total weight of the adhesive composition.

Suitable polyols include polyether polyols, polyester polyols, polycarbonate polyols, and hydroxyl-terminated rubbers. The term "hydroxyl-terminated rubber" designates in the present disclosure castor oil-based polyols and hydroxyl-terminated polybutadienes, also known as polybutadiene diols and polybutadiene polyols. Such hydroxyl-terminated polybutadienes are obtainable by polymerization of 1,3-butadienes and allyl alcohol or by oxidation of suitable polybutadienes. Polyols based on castor oil include castor oil of various grades, and castor oil derivatives.

According to the invention, the at least one first polyol is a hydroxyl-terminated polybutadiene, preferably a at 25 °C liquid hydroxyl-terminated polybutadiene. The term "polybutadiene" refers to an oligomer or a polymer of butadiene. The term "hydroxyl-terminated polybutadiene" refers to polybutadienes having primary hydroxyl groups.

It was surprisingly found out that isocyanate-functional polyurethane polymers obtained by using one or more hydroxyl-terminated polybutadienes as the at least one first polyol have particularly good compatibility with non-functionalized poly-α-olefins, in particular with non-functionalized amorphous poly-α-olefins (APAOs). Without being bound to any theory it is believed that the polybutadiene part of these polyols acts as a compatibilizer between the reaction product **RP** and the at least one non-functionalized poly-α-olefin **P.**

Particularly suitable hydroxyl-terminated polybutadienes have an average molecular weight (Mₙ) of not more than 10'000 g/mol and an average hydroxyl (OH) functionality of not more than 3.5. According to one or more embodiments, the at least one first polyol is a hydroxyl-terminated polybutadiene, preferably a at 25 °C liquid hydroxyl-terminated polybutadiene, preferably having an average molecular weight (Mₙ) in the range of 1'000 - 7'500 g/mol, preferably 1'500 - 7'000 g/mol, more preferably 1'500 - 6'000 g/mol, even more preferably 2'000 - 5'000 g/mol and/or an average hydroxyl (OH) functionality in the range of 1.7 - 2.9, preferably 1.8 -2.5, more preferably 1.8 - 2.2 and/or a glass transition temperature (T_{g}) of at or below - 15 °C, preferably at or below -35 °C and/or a vinyl content in the range of 40 - 75 wt.-%, preferably 45 - 70 wt.-% and/or a 1,4-cis content in the range of 2.5 - 25 wt.-%, preferably 5-20 wt.-% and/or a 1,4-trans content in the range of 10- 35 wt.-%, preferably 15 - 30 wt.-%, based on the weight of the hydroxyl-terminated polybutadiene. The term "vinyl content of a polybutadiene" refers to the weight percent of monomers in the 1,2-configuration, the term "1,4-cis content of a polybutadiene" refers to the weight percent of monomers in the 1,4-cis-configuration, and the term "1,4-trans content of a polybutadiene" refers to the weight percent of monomers in the 1,4-trans-configuration. The 1,2-monomers can occur anywhere in the butadiene oligomer/polymer; in clusters or groups, or interspersed regularly or irregularly among the aforementioned 1,4-monomers.

According to the invention, the at least one first polyol is a hydroxyl-terminated polybutadiene, preferably a at 25 °C liquid hydroxyl-terminated polybutadiene, having a vinyl content in the range of 45 - 75 wt.-%, preferably 50 - 75 wt.-%, more preferably 55 - 70 wt.-% and/or a 1,4-cis content in the range of 2.5 - 25 wt.-%, preferably 5-20 wt.-%, more preferably 7.5 - 17.5 wt.-% and/or a 1,4-trans content in the range of 12.5 - 35 wt.-%, preferably 15 - 30 wt.-%, more preferably 17.5 - 27.5 wt.-%, based on the weight of the hydroxyl-terminated polybutadiene.

According to one or more embodiments, the hydroxyl-terminated polybutadiene is a linear hydroxyl-terminated polybutadiene, preferably a at 25 °C liquid linear hydroxyl-terminated polybutadiene, more preferably a at 25 °C liquid linear non-hydrogenated hydroxyl-terminated polybutadiene.

Suitable hydroxyl-terminated polybutadienes are commercially available, for example, under the trade name of Poly bd^{®} and Krasol^{®} (from Cray Valley), such as Krasol^{®} LBH-P 2000, Krasol^{®} LBH-P 3000, or Poly bd^{®} R45V; under the trade name of Polyvest^{®} (from Evonik Industries), such as Polyvest^{®} HT; and under the trade name of Hypro^{®} (from Emerald Materials), such as Hypro^{®} 2800X95 HTB.

Suitable polyisocyanates to be used as the at least one polyisocyanate include, for example, aliphatic, cyclo-aliphatic, and aromatic polyisocyanates, especially diisocyanates, in particular monomeric diisocyanates. Non-monomeric diisocyanates such as oligomeric and polymeric products of monomeric diisocyanates, for example adducts of monomeric diisocyanates are also suitable but the use of monomeric diisocyanates is preferred.

According to one or more embodiments, the at least one polyisocyanate is a diisocyanate, preferably a monomeric diisocyanate, more preferably a monomeric diisocyanate having an average molecular weight (Mₙ) of not more than 1'000 g/mol, preferably not more than 500 g/mol, more preferably not more than 400 g/mol.

Examples of suitable monomeric diisocyanates include, for example, 1,6-hexamethylene diisocyanate (HDI), 2-methylpentamethylene 1,5-diisocyanate, 2,2,4- and 2,4,4-trimethyl-1,6-hexamethylene diisocyanate (TMDI) and mixtures of these isomers, 1,10 decamethylene diisocyanate, 1,12-dodecamethylene diisocyanate, lysine diisocyanate, lysine ester diisocyanate, cyclohexane 1,3-diisocyanate and cyclohexane 1,4-diisocyanate and mixtures of these isomers, 1-methyl-2,4- and -2,6-diisocyanatocyclohexane and mixtures of these isomers (HTDI or H6TDI), 1-isocyanato-3,3,5-trimethyl-5-isocyanatomethylcyclohexane (= isophoronediisocyanate or IPDI), perhydro-2,4'- and -4,4'-diphenylmethane diisocyanate (HMDI or H12MDI) and mixtures of these isomers, 1,4- diisocyanato-2,2,6-trimethylcyclohexane (TMCDI), 1,3- and 1,4-bis(isocyanato-methyl)cyclohexane, m- and p-xylylene diisocyanate (m- and p-XDI) and mixtures of these isomers, m- and p-tetramethyl-1,3- and 1,4-xylylene diisocyanate (m- and p-TMXDI) and mixtures of these isomers, bis(1-isocyanato-1-methylethyl)naphthalene, 2,4- and 2,6-tolylene diisocyanate and mixtures of these isomers (TDI), 4,4'-, 2,4'- and 2,2'-diphenylmethane diisocyanate and mixtures of these isomers (MDI), 1,3- and 1,4-phenylene diisocyanate and mixtures of these isomers, 2,3,5,6-tetramethyl-1,4-diisocyanatobenzene, naphthalene 1,5-diisocyanate (NDI), 3,3'-dimethyl-4,4'-diisocyanatobiphenyl (TODI), and dianisidine diisocyanate (DADI).

According to one or more embodiments, the monomeric diisocyanate is selected from the group consisting of 4,4'-, 2,4'-, and 2,2'-diphenylmethane diisocyanate and mixtures of these isomers (MDI), 2,4- and 2,6-tolylene diisocyanate and mixtures of these isomers (TDI), 1,6-hexamethylene diisocyanate (HDI), and 1-isocyanato-3,3,5-trimethyl-5-isocyanatomethylcyclohexane (IPDI). Furthermore, a person skilled in the art knows that the technical grade products of diisocyanates may frequently contain isomer mixtures or other isomers as impurities. According to one or more embodiments, the monomeric diisocyanate is selected from the group consisting of MDI and IPDI. Suitable monomeric diisocyanates are commercially available, for example, under the trade name of Lupranat^{®} (from BASF) and Desmodur (from Covestro).

The type of the at least one second polyol is not particularly restricted. Suitable polyols to be used as the at least one second polyol include polyether polyols, polyester polyols, and polycarbonate polyols. Preferred polyols for use as the at least second polyol are, for example, diols and triols and mixtures thereof.

Suitable polyether polyols, also known as polyoxyalkylene polyols, are those which are polymerization products of ethylene oxide, 1,2-propylene oxide, 1,2- or 2,3-butylene oxide, tetrahydrofuran or mixtures thereof, optionally polymerized by means of a starter molecule having two or more active hydrogen atoms, such as, for example, water, ammonia or compounds having two or more OH- or NH- groups such as 1,2-ethanediol, 1,2- and 1,3-propanediol, neopentyl glycol, diethylene glycol, triethylene glycol, isomeric dipropylene glycols and tripropylene glycols, isomeric butanediols, pentanediols, hexanediols, heptanediols, octanediols, nonanediols, decanediols, undecanediols, 1,3- and 1,4-cyclohexanedimethanol, bisphenol A, hydrogenated bisphenol A, 1,1,1-trimethylolethane, 1,1,1-trimethylolpropane, glycerol, aniline, and mixtures of the aforesaid compounds. Use can be made both of polyoxyalkylene polyols which have a low degree of unsaturation (measured according to ASTM D-2849-69 and expressed as milliequivalents of unsaturation per gram of polyol (meq/g)), produced for example by means of double metal cyanide complex catalysts (DMC catalysts), and of polyoxyalkylene polyols having a relatively high degree of unsaturation, produced for example by means of anionic catalysts such as NaOH, KOH or alkali metal alkoxides.

Particularly suitable polyether polyols are polyoxyalkylene diols or polyoxyalkylene triols, especially polyoxyethylene diols or polyoxyethylene triols. Especially suitable are polyoxyalkylene diols or polyoxyalkylene triols, more particularly polyoxypropylene diols and triols, having a number average molecular weight (Mₙ) in the range of 1'000 - 30'000 g/mol, and also polyoxypropylene diols and triols having a number average molecular weight (Mₙ) of 400 - 8'000 g/mol. Suitable polyether polyols are commercially available, for example, under the trade name of Acclaim^{®} and Desmophene^{®} (from Covestro).

Suitable polyester polyols include liquid polyester polyols as well as amorphous, partially crystalline, and crystalline polyester polyols, which are solid at a temperature of 25 °C. These can be obtained from by reacting dihydric and trihydric, preferably dihydric, alcohols, for example, 1,2-ethanediol, diethylene glycol, triethylene glycol, 1,2-propanediol, 1,3-propanediol, dipropylene glycol, 1,4-butanediol, 1,5-pentanediol, 1,6-hexanediol, 1,8-octanediol, 1,10-decanediol, 1,12-dodecanediol, dimer fatty alcohol, neopentyl glycol, glycerol, 1,1,1-trimethylolpropane or mixtures of the aforesaid alcohols, with organic dicarboxylic acids or tricarboxylic acids, preferably dicarboxylic acids, or their anhydrides or esters, such as succinic acid, glutaric acid, 3,3-dimethylglutaric acid, adipic acid, suberic acid, sebacic acid, undecanedioic acid, dodecanedicarboxylic acid, azelaic acid, maleic acid, fumaric acid, phthalic acid, dimer fatty acid, isophthalic acid, terephthalic acid, and hexahydrophthalic acid, or mixtures of the aforesaid acids, and also polyester polyols made from lactones such as from ε-caprolactone, for example, also known as polycaprolactones.

Preferred polyester polyols include those obtained by reacting adipic acid, sebacic acid or dodecanedicarboxylic acid as dicarboxylic acid and hexanediol or neopentyl glycol as dihydric alcohol. Further examples of suitable polyester polyols include polyester polyols of oleochemical origin. Polyester polyols of this type may be prepared, for example, by complete ring opening of epoxidized triglycerides of a fat mixture comprising at least partially olefinically unsaturated fatty acids, with one or more alcohols having 1-12 carbon atoms, and by subsequent partial transesterification of the triglyceride derivatives to give alkyl ester polyols having 1-12 carbon atoms in the alkyl radical. Particularly suitable crystalline or semicrystalline polyester polyols include adipic acid/hexanediol polyester and dodecanedicarboxylic acid/hexanediol polyesters.

Suitable polycarbonate polyols are those that are obtainable by reacting, for example, the above mentioned dihydric or trihydric alcohols suitable for synthesizing the polyester polyols, with dialkyl carbonates, diaryl carbonates or phosgene. Polycarbonate diols are particularly suitable, especially amorphous polycarbonate diols.

Likewise suitable are so-called "EO-endcapped" (ethylene oxide-endcapped) polyoxypropylene diols or triols. The latter are special polyoxypropylene-polyoxyethylene polyols, which are obtained, for example, by alkoxylating pure polyoxypropylene polyols with ethylene oxide after the end of the polypropoxylation process, and which therefore have primary hydroxyl groups.

Preferably, the at least one second polyol is selected from the group consisting of amorphous, partially crystalline, and crystalline polyester polyols, which are solid at a temperature of 25 °C. According to one or more embodiments, the at least one second polyol is selected from the group consisting of partially crystalline and crystalline polyester polyols, which are solid at a temperature of 25 °C. Particularly suitable partially crystalline and crystalline polyester polyols have a hydroxyl number measured according to DIN 53 240-2 standard of 10 - 100 mg KOH/g, preferably 15 - 50 mg KOH/g and/or a softening point measured by Ring and Ball method according to DIN ISO 4625 standard of 50 - 100 °C, preferably 55 - 85 °C and/or an average molecular weight (Mₙ) of 500 - 10'000 g/mol, preferably 1'000 - 5'000 g/mol. Suitable at 25 °C solid partially crystalline and crystalline polyester polyols, are commercially available, for example, under the trade name Dynacoll^{®} 7300-series (from Evonik Industries).

According to one or more embodiments, the reaction product **RP** contained in the adhesive composition is obtainable by a method comprising steps of:
A) Reacting the at least one first polyol with the at least one polyisocyanate wherein the NCO/OH ratio is above 1.5 to obtain a reaction mixture containing an isocyanate-functional polyurethane prepolymer and unconverted polyisocyanate and
B) Adding to the reaction mixture obtained in step A) at least one second polyol different from the at least one first polyol and carrying out the reaction wherein the NCO/OH-ratio is above 2.5 to give the reaction product RP.

The reaction product **RP** obtainable by using the multi-step method exhibits a low level of residual polyisocyanates, such as diisocyanates, in particular low level of residual monomeric diisocyanates, for example monomeric MDI, such as below 1.5 wt.-%, preferably below 1.0 wt.-%, based on the total weight of the reaction product **RP.**

The step A) of the method for producing the reaction product **RP** is conducted by reacting the at least one first polyol with the at least one polyisocyanate, wherein the ratio NCO/OH ratio is above 1.5. The term "NCO/OH ratio" refers here to the molar ratio of the isocyanate groups of the at least one polyisocyanate to the hydroxyl groups of the at least one first polyol. In case the reaction of step A) is carried out in the presence of further reactive compounds containing isocyanate groups or hydroxyl groups, these are also taken into account in calculating the NCO/OH ratio.

According to one or more embodiments, the NCO/OH ratio in step A) of the method for producing the reaction product **RP** is not less than 1.7, preferably not less than 1.9, more preferably not less than 1.95 while being not greater than 3.5, preferably not greater than 3.0, more preferably not greater than 2.75. According to one or more embodiments, the NCO/OH ratio in step A) is in the range from 1.5 to 2.5, preferably from 1.7 to 2.2.

The at least one first polyol may comprise, for example, 50 - 90 wt.-%, preferably 65 - 85 wt.-% of the total weight of the composition, which is reacted in step A) of the method.

The at least one polyisocyanate may comprise, for example, 5 - 35 wt.-%, preferably 5-30 wt.-% of the total weight of the composition, which is reacted in step A) of the method.

The reaction of the at least one first polyol and the at least one polyisocyanate in step A) may be carried out according conventional methods used for preparation of isocyanate-functional polyurethane prepolymers. The reaction in step A) may, for example, be carried out at temperatures in the range of 50 - 160 °C, preferably 60 - 120 °C, optionally in the presence of a catalyst. The reaction time depends on the temperature employed, but may, for example, be in the range of from 30 minutes to 6 hours, in particular from 30 minutes to 3 hours, preferably from 30 minutes to 1.5 hours. Suitable catalysts used in step A) include, for example, metal catalysts, such as Coscat^{®}83 (from Vertellus Performance Materials Inc.), and tin catalysts.

Since the reaction of the at least one first polyol with the at least one polyisocyanate is conducted in a stoichiometric excess of the polyisocyanate, the reaction mixture obtained in step A) contains some unconverted polyisocyanate, preferably unconverted monomeric diisocyanate. According to one or more embodiments, the amount of unconverted polyisocyanate in the reaction mixture obtained in step A) is 1.5 - 5 wt.-%, preferably 2-4 wt.-%, based on the total weight of the reaction mixture. The amount of unconverted polyisocyanates present in the reaction mixture can be determined using high pressure liquid chromatography (HPLC).

According to one or more embodiments, the isocyanate-functional polyurethane prepolymer contained in the reaction mixture obtained in step A) has an average isocyanate functionality of not more than 3.5, preferably not more than 3.0. The term "average NCO-functionality" designates in the present disclosure the average number of isocyanate (NCO) groups per molecule. The average NCO functionality of a compound can be calculated by using the method as defined in ISO 14896-2006 standard method A.

In step B) of the method for producing the reaction product **RP,** at least one second polyol different from the at least one first polyol is added to the reaction mixture obtained in step A) containing an isocyanate-functional polyurethane prepolymer and unconverted polyisocyanate and the reaction is carried out wherein the NCO/OH-ratio is above 2.5 to give the reaction product **RP.** In case the reaction in step B) is carried out in the presence of further compounds containing isocyanate groups or hydroxyl groups, other than the isocyanate-functional polyurethane prepolymer, unconverted polyisocyanate, and the at least one second polyol, these are also taken into account in calculating the NCO/OH ratio.

The NCO/OH ratio in step B) is preferably not less than 3, more preferably not less than 3.5 while preferably being not greater than 30 and more preferably not greater than 25. According to one or more embodiments, the NCO/OH ratio in step B) is in the range from 3 to 20, preferably from 3 to 10. The reaction conducted in step B) will convert substantially all the hydroxyl groups of the at least one second polyol, for example at least 95%, generally at least 99% of the hydroxyl groups of the at least one second polyol.

According to one or more embodiments, the at least one second polyol different from the at least one first polyol is added to the reaction mixture in an amount of 1 - 35 wt.-%, preferably 5 - 30 wt.-%, based on the sum of the weights of the at least one first polyol, the at least one second polyol, and the at least one polyisocyanate.

The reaction of the at least one second polyol with the reaction mixture in step B) is carried out in a conventional manner. This means in particular that the hydroxyl groups of the at least one second polyol react with the isocyanate groups of the reaction mixture, especially with the isocyanate groups of the unconverted polyisocyanates and isocyanate groups of the isocyanate-functional polyurethane prepolymer. The reaction of the at least one second polyol with the reaction mixture containing the isocyanate-functional polyurethane prepolymer and unconverted polyisocyanate in step B) may, for example, be carried out at temperatures in the range of 60 - 160°C, preferably 80 - 140°C. The reaction time, as will be appreciated, depends on the temperature employed, but may, for example, be in the range of from 30 minutes to 6 hours, preferably from 30 minutes to 3 hours, more preferably from 30 minutes to 1.5 hours.

The reaction mixture obtained in step A) is usable as such for further reacting in step B), i.e. without any additional workup steps. More particularly, it is not necessary to separate the unconverted polyisocyanate from the reaction mixture before conducting the reaction of step B). Apart from the unconverted polyisocyanate present in the reaction mixture, no additional polyisocyanate is preferably added. The method for producing the reaction product **RP** comprising steps A) and B) is preferably performed as a one-pot process.

According to one or more embodiments, the adhesive composition further comprises at least one at 25 °C liquid polyolefin resin **PR.** The at least one at 25 °C liquid polyolefin resin **PR** is different from the at least one non-functionalized poly-α-olefin **P,** the at least one first polyol, and the at least one second polyol. Preferably, the at least one at 25 °C liquid polyolefin resin **PR** is a at 25 °C liquid non-functionalized polyolefin resin.

According to one or more embodiments, the at least one at 25 °C liquid polyolefin resin **PR** is present in the adhesive composition in an amount of 1 - 30 wt.-%, preferably 5 - 25 wt.-%, more preferably 5-20 wt.-%, even more preferably 5 - 17.5 wt.-%, based on the total weight of the adhesive composition.

According to one or more embodiments, the at least one at 25 °C liquid polyolefin resin **PR** has a number average molecular weight (Mₙ) in the range of 500 - 5'000 g/mol, preferably 500 - 3'500 g/mol, more preferably 1'000 - 3'000 g/mol, more preferably 1'500 - 2'500 g/mol and/or a pour point determined according to ISO 3016 standard in the range of -10 to +15 °C, preferably from -10 to +10 °C.

According to one or more embodiments, the at least one at 25 °C liquid polyolefin resin **PR** is selected from a group consisting of polyisobutylene (PIB) and polybutene, in particular low molecular weight polyisobutylene and low molecular weight polybutene, preferably having a number average molecular weight (Mₙ) in the range of 500 - 5'000 g/mol, more preferably 500 - 3'500 g/mol, even more preferably 1'000 - 3'000 g/mol, still more preferably 1'500 - 2'500 g/mol and/or a pour point determined according to ISO 3016 standard in the range of -10 to +15 °C, preferably from -10 to +10 °C. The term "polyisobutylene" refers in the present document to polyolefins and olefin oligomers of isobutylene or 2-methyl-1-propene, preferably containing at least 75 %, more preferably at least 85 % of repeat units derived from isobutylene. The term "polybutene" refers in the present document to polyolefins and olefin oligomers comprising isobutylene and/or 1-butene and/or 2-butene. The ratio of the C₄-olefin isomers can vary by manufacturer and by grade. When the C₄-olefin is exclusively 1-butene, the material is referred to as "poly-n-butene" or "PNB".

Suitable commercially available at 25 °C liquid polybutenes and polyisobutylenes include, for example, Indopol^{®} H-300 and Indopol^{®} H-1200 (from Ineos); Glissopal^{®} V230, Glissopal^{®} V500, and Glissopal^{®} V700 (from BASF); Dynapak^{®} poly 230 (from Univar GmbH, Germany); and Daelim^{®} PB 950 (from Daelim Industrial).

According to one or more embodiments, the at least one at 25 °C liquid polyolefin resin **PR** is a at 25 °C liquid polyisobutylene, preferably having a number average molecular weight (Mₙ) of not more than 5'000 g/mol, more preferably not more than 3'000 g/mol, even more preferably not more than 2'500 g/mol and/or a pour point determined according to ISO 3016 standard in the range of -10 to +15 °C, preferably -10 to +10 °C and/or a polydispersity index (M_{w}/Mₙ) determined by GPC, of not more than 5, preferably in the range of 0.5 - 5.0, more preferably 1.0 - 4.5, even more preferably 1.0 - 3.5, still more preferably 1.25 - 2.5.

According to one or more embodiments, the adhesive composition further comprises at least one polyolefin wax **PW.** According to one or more embodiments, the at least one polyolefin wax **PW** is present in the adhesive composition in an amount of 5 - 40 wt.-%, preferably 10 - 35 wt.-%, more preferably 15 - 35 wt.-%, based on the total weight of the adhesive composition.

Suitable polyolefin waxes **PW** include, in particular, the ones obtained by metallocene-catalyzed polymerization. According to one or more embodiments, the at least one polyolefin wax **PW** has an average molecular weight of 5'000 - 35'000 g/mol, preferably 5'000 - 30'000 g/mol and/or a softening point measured by Ring and Ball method according to DIN EN 1238 of not more than 140 °C, preferably not more than 120 °C more preferably not more than 100 °C and a melt viscosity measured according to DIN 53019 standard at 170 °C in the range of 10 - 10'000 MPa s, preferably 750 - 7'500 MPa·s and/or a heat of fusion (Hf) as determined by DSC measurements of at least 40 J/g, preferably at least 45 J/g, more preferably at least 50 J/g, even more preferably at least 55 J/g.

According to one or more embodiments, the at least one polyolefin wax **PW** is a non-functionalized polyolefin wax, preferably a non-functionalized copolymer wax, more preferably a non-functionalized propylene-ethylene copolymer wax.

Suitable non-functionalized propylene-ethylene copolymer waxes are commercially available, for example, under the trade name of Licocene^{®} (from Clariant), such as Licocene^{®} PP 1302, Licocene^{®} PP 1502, Licocene^{®} PP 1602, Licocene^{®} PP 2602, and Licocene^{®} PP 3602 TP.

The adhesive composition may further comprise one or more catalysts, which are used to accelerate the reaction of the isocyanate groups with moisture. The presence of such catalysts is not mandatory but it may be preferred. Examples of suitable catalysts include metal-based catalysts such as dialkyltin complexes, particularly dibutyltin(IV) or dioctyltin(IV) carboxylates or acetoacetonates, such as dibutyltindilaurate (DBTDL), dibutyltindiacetylacetonate, dioctyltindilaurate (DOTDL), further bismuth(III) complexes such as bismuthoctoate or bismuthneodecanoate, zinc(II) complexes, such as zincoctoate or zincneodecanoate, and zirconium(IV) complexes, such as zirconiumoctoate or zirconium neodecanoate.

Further examples of suitable catalysts include compounds containing amine groups such as, dimorpholinodialkylethers and/or dimorpholino substituted polyalkylene glycols, for example 2,2'-dimorpholinodiethyl ether and 1,4-diazabicyclo[2.2.2]-octane. Combinations of two or more catalysts may also be used, preferred ones including combinations of one or more metal-catalysts with one or more morpholine amine compounds.

The total amount of catalysts catalyzing the reactions of isocyanate groups with moisture, if present in the adhesive composition, is preferably 0.005 - 2.00 wt.-%, more preferably 0.05 - 1.00 wt.-%, based on the total weigh of the adhesive composition.

The adhesive composition can further comprise auxiliary substances and additives, for example, those selected from the group consisting of fillers, plasticizers, adhesion promoters, UV absorption agents, UV and heat stabilizers, optical brighteners, pigments, dyes, and desiccants. Examples of suitable UV stabilizers that can be added to the adhesive composition include, for example, sterically hindered phenols. The total amount of such auxiliary substances and additives is preferably not more than 15 wt.-%, more preferably not more than 10 wt.-%, even more preferably not more than 5 wt.-%, based on the total weight of the adhesive composition.

The adhesive composition is a moisture-curing adhesive composition, i.e. the adhesive composition can be cured by contacting the composition with water, especially with atmospheric moisture. Preferably, the adhesive composition is a moisture curing hot-melt adhesive composition, preferably having a low content of monomeric diisocyanates, such as not more than 1.0 wt.-%, preferably not more than 0.9 wt.-%, more preferably not more than 0.8 wt.-%, based on the total weight of the adhesive composition.

Furthermore, the adhesive composition of the present invention has good workability under typical application conditions of hot-melt adhesives, in particular at temperatures in the range of 100 - 180°C, meaning that at the application temperature the adhesive has sufficiently low viscosity to enable application to a substrate in a molten state. The adhesive composition also develops a high initial strength immediately after the application to a substrate upon cooling even before the initiation of the crosslinking reaction with water, in particular with atmospheric moisture.

According to one or more embodiments, the adhesive composition has a viscosity at a temperature of 170°C of not more than 100'000 mPa s, preferably not more than 75'000 mPa s, more preferably not more than 50'000 mPa s. The viscosity at temperature of 170 °C can be measured using conventional viscometers at 5 revolutions per minute, for example by using a Brookfield DV-2 Thermosel viscometer with a spindle No. 27.

According to one or more embodiments, the adhesive composition has a softening point measured by Ring and Ball method according to DIN EN 1238 standard in the range of 60 - 150 °C, preferably 65 - 140 °C, more preferably 70 - 130 °C, even more preferably 75 - 115 °C.

Furthermore, the adhesive composition can be provided as a one-component storage-stable composition. According to one or more embodiments, the adhesive composition is a one-component moisture curing hot-melt adhesive composition. The term "storage-stable composition" refers in the present document to a composition which, in particular in the absence of moisture, can be kept in a suitable package(s) or facility, such as a drum, a pouch or a cartridge, for example, for a period of several months up to one year or more, without suffering any service-relevant change in the application properties and/or reactivity of the composition.

The preferences given above for the at least one non-functionalized poly-α-olefin **P,** the reaction product **RP,** the at least one polyolefin resin **PR,** and to the at least one polyolefin wax **PW** apply equally to all subjects of the present invention unless stated otherwise.

Another subject of the present invention is a method for producing an adhesive composition of the present invention comprising mixing of the at least one non-functionalized poly-α-olefin **P** and the reaction product **RP** with each other.

The mixing of the at least one non-functionalized poly-α-olefin **P** and the reaction product **RP** with each other is preferably conducted at a temperature, which is above the softening point of both of these constituents. According to one or more embodiments, the mixing of the at least one non-functionalized poly-α-olefin **P** and the reaction product **RP** is conducted at a temperature in the range of 50 - 200 °C, preferably 65 - 180 °C, more preferably 80 - 175 °C, even more preferably 90 - 160 °C.

According to one or more embodiments, the adhesive composition further comprises at least one polyolefin wax **PW,** wherein the method for producing the adhesive composition comprises steps of:
i) Mixing the at least one first polyol with the at least one polyolefin wax **PW,**
ii) Adding to the thus obtained mixture the at least one polyisocyanate to obtain a starting mixture,
iii) Reacting the starting mixture to obtain a first reaction mixture containing an isocyanate-functional polyurethane prepolymer, unconverted polyisocyanate, and the at least one polyolefin wax **PW,**
iv) Adding to the first reaction mixture the at least one second polyol different from the at least one first polyol,
v) Carrying out the reaction between the isocyanate-functional polyurethane prepolymer, unconverted polyisocyanate, and the at least one second polyol to obtain a second reaction mixture containing a reaction product **RP** and the at least one polyolefin wax **PW,**
vi) Mixing the second reaction mixture with the at least one non-functionalized poly-α-olefin **P.**

According to one or more embodiments, the adhesive composition further comprises at least one at least one at 25 °C liquid polyolefin resin **PR,** wherein the method for producing the adhesive composition comprises steps of:
i) Mixing the at least one first polyol with the at least one polyolefin wax **PW,**
ii) Adding to the thus obtained mixture the at least one polyisocyanate to obtain a starting mixture,
iii) Reacting the starting mixture to obtain a first reaction mixture containing an isocyanate-functional polyurethane prepolymer, unconverted polyisocyanate, and the at least one polyolefin wax **PW,**
iv) Adding to the first reaction mixture the at least one second polyol different from the at least one first polyol,
v) Carrying out the reaction between the isocyanate-functional polyurethane prepolymer, unconverted polyisocyanate, and the at least one second polyol to obtain a second reaction mixture containing a reaction product **RP** and the at least one polyolefin wax **PW,**
vi) Mixing the at least one non-functionalized poly-α-olefin **P** with the at least one at 25 °C liquid polyolefin resin **PR,**
vii) Mixing the second reaction mixture with the mixture obtained in step vi).

The temperature at which the steps i) to vii) of the method are conducted depends on the embodiment of the adhesive composition. According to one or more embodiments, the steps i) - vii) are conducted at a temperature in the range of 50 - 200 °C, preferably 65 - 180 °C, more preferably 80 - 160 °C, even more preferably 90 - 150 °C.

Another subject of the present invention is use of the adhesive composition of the present invention as an assembly adhesive, a laminating adhesive, or as an adhesive for the building of sandwich elements.

Another subject of the present invention is a method for adhesively bonding a first substrate to a second substrate, the method comprising steps of:
I) Heating an adhesive composition according to the present invention to provide a melted adhesive composition,
II) Applying the melted adhesive composition to a surface of the first substrate to form an adhesive film,
III) Contacting the adhesive film with a surface of the second substrate, and
IV) Chemically curing the adhesive film with water, in particular with atmospheric moisture.

The first and second substrates are preferably sheet-like articles having first and second major surfaces defined by peripheral edges and defining a thickness there between or three-dimensional shaped articles.

In the method for adhesively bonding a first substrate to a second substrate, the adhesive composition is heated to a temperature above the softening point of the adhesive composition and applied on the surface of the first substrate in molten state using any conventional technique, for example, by using slot die coating, roller coating, extrusion coating, calender coating, or spray coating. The adhesive composition can be applied to the surface of the first substrate with a coating weight of, for example, 50 - 500 g/m², such as 55 - 350 g/m², in particular 65 - 150 g/m².

Especially in case the adhesive composition is applied to the surface of the first substrate as a thin film having a coating weight of, for example, less than 150 g/m², in particular less than 100 g/m², the adhesive film formed in step II) may be reactivated by heating before being contacted with the surface of the second substrate. The reactivation temperature depends on the embodiment of the adhesive composition. It may be preferable, for example, that the adhesive film is reactivated by heating to a temperature of 60 - 200 °C, in particular 70 - 180 °C, preferably 120 - 160 °C. The heating of the adhesive film can be conducted using any conventional techniques, such as heating in an oven, heating by air stream, or heating with infrared (IR)-radiation. The reactivated adhesive film is preferably contacted with the second substrate within short time after the reactivation temperature is reached, in any case within the open time of the adhesive composition.

After the adhesive film has been contacted with the surface of the second substrate, the adhesive composition develops a certain initial adhesive strength by physical curing, i.e. upon cooling. Depending on the application temperature and on the embodiment of the adhesive composition, in particular on the reactivity of the adhesive, the chemical curing reactions may begin already during the application of the adhesive composition on the surface of the first substrate. Typically, however, major part of the chemical curing occurs after the application of adhesive, in particular, after the applied adhesive film has been contacted with the surface of the second substrate.

The first and second substrates can be composed of any conventional material including polymeric material, metal, painted metal, glass, wood, wood derived materials such as natural fiber polypropylene (NFPP), and fiber materials. Suitable polymeric materials include, for example, polyethylene (PE), in particular high density polyethylene (HDPE), polypropylene (PP), glass-fiber reinforced polypropylene (GFPP), polyvinyl chloride (PVC), polyethylene terephthalate (PET), polystyrene (PS), polycarbonate (PC), polymethylmethacrylate (PMMA), acrylonitrile butadiene styrene (ABS), polyamide (PA), and combinations thereof. The first and second substrates can be composed of a single layer or of multiple layers of different types of materials. The layer(s) composed of polymeric materials can further contain additives such as fillers, plasticizers, flame retardants, thermal stabilizers, antioxidants, pigments, dyes, and biocides.

According to one or more embodiments, one of the first and second substrates is composed of a polar material, wherein the other substrate is composed of a non-polar material.

According to one or more further embodiments, the first substrate, or in case the first substrate is composed of multiple layers, the layer constituting the outer exterior surface on which the adhesive composition is applied in step II) of the method , is composed of a polar material, preferably selected from the group consisting of PMMA, PA, PC, ABS, glass fiber reinforced plastic (GFRP), glass, and metal and the second substrate, or in case the second substrate is composed of multiple layers, the layer constituting the outer exterior surface, which is contacted with the adhesive film in step III) of the method, is composed of a non-polar material, preferably selected from the group consisting of polypropylene, polyethylene, and polystyrene.

According to one or more further embodiments, the first substrate, or in case the first substrate is composed of multiple layers, the layer constituting the outer exterior surface on which the adhesive composition is applied in step II) of the method, is composed of a non-polar material, preferably selected from the group consisting of polypropylene, polyethylene, or polystyrene and the second substrate, or in case the second substrate is composed of multiple layers, the layer constituting the outer exterior surface which is contacted with the adhesive film in step III) of the method, is composed of a polar material, preferably selected from the group consisting of PMMA, PA, PC, ABS, glass fiber reinforced plastic (GFRP), glass, or metal

Still another subject of the present invention is a composite element obtainable by using the method for adhesively bonding a first substrate to a second substrate of the present invention.

The composite element of the present invention can be used, for example, for producing interior lining components of automotive vehicles. Examples of such interior lining components include door panel pieces, switch panels, rear parcel shelves, head liners, sliding roofs, center consoles, glove compartments, sun visors, pillars, door handles, arm rests, flooring, cargo flooring, and trunk area flooring as well as sleeping cabins and rear panels of trucks.

### Examples

The followings compounds and products shown in Table 1 were used in the examples.

**Table 1**

| | | |
|---|---|---|
| Polybd-OH | Hydroxyl terminated polybutadiene, average molecular weight (Mn) 2'500 - 3'500 g/mol, 1,2-vinyl content 65 wt.-%, OH-functionality 1.9-2.0 | Cray Valley USA |
| Polyester polyol | Partially crystalline polyester polyol, melting point 50 - 65 °C (DSC) | Evonik Industries AG |
| P-E wax | Propylene ethylene copolymer wax, softening point 90 - 100 °C (ASTM D 3104) | Clariant International Ltd |
| MDI | 4,4'-diphenylmethane diisocyanate, NCO content 30 - 40 g/100 g (ASTM D 5155-96 A) | BASF Polyurethanes GmbH |
| PIB | At 25 °C liquid polyisobutylene, molecular weight 850 - 1'000 g/mol (GPC) | Univar Inc |
| APAO | Propene rich amorhous poly-α-olefin, softening point 90 - 105 °C (DIN EN 1427) | Evonik Industries AG |

The adhesive compositions presented in Table 2 were prepared according to the procedures as presented below.

### Preparation of tested adhesive compositions

### Ex-1

50 g of Polybd-OH and 50 g of P-E wax were charged into a reactor and the mixture was kept under vacuum with stirring (~80 rpm) at a temperature of 140 °C for 60 minutes to dewater the components and to obtain a homogeneously mixed mixture. 8.7 g of MDI were then added into the reactor and the thus obtained starting mixture was reacted with stirring (~80 rpm) for 60 minutes under vacuum (- 0.9 bar) at a temperature of 140 °C to obtain a first reaction mixture containing an isocyanate-functional polyurethane prepolymer, unconverted diisocyanate, and P-E wax. 40.7 g of the first reaction mixture was then mixed with 9.5 g of dewatered polyester polyol and reacted with stirring (~80 rpm) for 60 minutes under vacuum (- 0.9 bar) at a temperature of 140 °C to obtain a second reaction mixture (reactive polyurethane adhesive) comprising a reaction product and the P-E-wax.

Finally, a previously prepared mixture containing 35 g of APAO and 15 g of PIB (non-reactive polyolefin adhesive) was mixed with the second reaction mixture and stirred (~80 rpm) at a temperature of 140 °C for 20 minutes. The obtained "hybrid" adhesive composition was filled in tubes and stored at room temperature in the absence of moisture.

### Ex-2

91.2 g of the first reaction mixture containing an isocyanate-functional polyurethane prepolymer, unconverted diisocyanate, and P-E wax as described in Ex-1 was mixed with 21.3 g of dewatered polyester polyol and reacted with stirring (~80 rpm) for 60 minutes under vacuum (- 0.9 bar) at a temperature of 140 °C to obtain a second reaction mixture (polyurethane adhesive composition) comprising a reaction product and P-E-wax. A previously prepared mixture containing 26.25 g of APAO and 11.25 g of PIB (non-reactive polyolefin adhesive) was then mixed with the second reaction mixture and stirred (~80 rpm) at a temperature of 140 °C for 20 minutes. The obtained "hybrid" adhesive composition was filled in tubes and stored at room temperature in the absence of moisture.

The SikaMelt^{®} 9677 used as a reference example Ref-2 is a standard moisture curing polyurethane hot-melt adhesive obtainable from Sika Automotive GmbH.

### Measurement methods

The adhesive compositions were characterized using the following measurement methods.

### Open time

The sample adhesive composition provided in a sealed tube was first preheated in an oven to at temperature of 140°C for a time period of 20 minutes. After the heating, a sample of 20 g of the molten adhesive was applied with a doctor blade to surface of a silicone paper strip (B700 white, Laufenberg & Sohn KG) placed on a heating plate. The silicone paper strip had dimensions of 30 cm x 10 cm and the adhesive was applied as a film having a thickness of 500 µm and dimensions of 30 cm x 6 cm. Before applying the adhesive film, the silicone paper strip and the doctor blade were heated to a temperature of 150°C with the heating plate.

Immediately after application of the adhesive, the silicone paper strip was removed from the heating plate and placed (with the adhesive film facing upwards) on a sheet of plywood at room temperature (23°C) and the time was recorded as the starting point of the measurement. Every 10 seconds a short strip of silicone coated paper having dimensions of 10 cm x 1 cm and formed in a roll (non-siliconized surface facing outwards) was placed on the adhesive film and then slowly removed to separate the strip from the adhesive film. The procedure was repeated until the paper strip could not be removed from the adhesive film without damaging the paper strip or the adhesive film. The time interval between the starting point of the measurement and the last sampling point was recorded as the open time (in seconds) of the adhesive composition

The values of open time presented in Table 2 have been obtained as an average of three measurements conducted with the same adhesive composition.

### Curing time

The sample adhesive composition provided in a sealed tube was preheated in an oven to at temperature of 140°C for a time period of 20 minutes. After the heating, a sample of 20 g of the molten adhesive was applied with a doctor blade to surface of a silicone paper strip (B700 white, Laufenberg & Sohn KG) placed on a heating plate. The silicone paper had dimensions of 30 cm x 10 cm and the adhesive was applied as a film having a thickness of 500 µm and dimensions of 30 cm x 6 cm. Before applying the adhesive film, the silicone paper strip and the doctor blade were heated to a temperature of 150°C with the heating plate.

Immediately after application of the adhesive, the silicone paper strip was removed from the heating plate and stored at standard climatic conditions (23°C, 55 % relative humidity). The point of time when the adhesive film was solidified was recorded as the starting point of the measurement. At defined sampling times, a sample strip having dimensions of 10 cm x 1 cm was cut from the silicone paper strip and placed on a heating plate having a temperature of 150°C. The procedure was continued until the adhesive film on the sample strip no longer melted on the heating plate. The length of time interval between the starting point of the measurement and the last sampling point was recorded as the through curing time (in days) of the adhesive composition.

The values of curing time presented in Table 2 have been obtained as an average of 3 measurements conducted with the same hot-melt adhesive composition.

### Green strength

The adhesive composition provided in a sealed tube was preheated in an oven to at a temperature of 140°C for a time period of 30 minutes. After the heating, a sample of the molten adhesive was applied on the surface of a wood specimen (pine) having dimensions of 9 cm x 2 cm x 5 mm. The adhesive was applied as a film having dimensions of 2 cm x 2 cm and a thickness of 1 mm. Immediately after the application of the adhesive a second wood specimen (pine) having same dimensions as the first wood specimen was positioned over the first wood specimen along the edge of the adhesive film to form a test composite element. The second wood specimen was pressed firmly against the first wood specimen to remove air from adhesive bond. A weigh of 150 g was placed on the top surface of the second wood specimen. Any adhesive squeezed out from the joint was trimmed off with a knife. The test composite specimen was stored at standard climatic conditions (23°C, 55% relative humidity) for a period of 30 minutes before measuring of the green strength of the adhesive composition.

The green strength of the adhesive composition was determined as tensile strength of the adhesive bond. The tensile strengths were measured with a material testing apparatus (Zwick Z 020) fulfilling the requirements of the DIN 51221 standard and using a traversing speed of 10 mm/min.

The green strength values for each adhesive composition presented in Table 2 have been obtained as an average of three measurements conducted with identical test composite elements prepared by using the same adhesive composition.

### Tensile strength and elongation at break

The adhesive composition provided in a sealed tube was preheated in an oven to at temperature of 140°C for a time period of 20 minutes. After the heating, a sample of 40 g of the molten adhesive was applied with a doctor blade to surface of a silicone paper strip (B700 white, Laufenberg & Sohn KG) placed on a heating plate. The silicone paper had dimensions of 60 cm x 10 cm and the adhesive was applied as a film having a thickness of 500 µm and dimensions of 60 cm x 6 cm. Immediately after the application of the adhesive, the silicone paper strip was removed from the heating plate and stored at standard climatic conditions (23°C, 55 % relative humidity).

In a method based on DIN 53504, five rectangular test specimens having dimensions of 2.0 cm x 8.0 cm were cut from a cured adhesive film having a thickness of 500 µm (cured for 14 days at 23°C/50% relative humidity). The test specimens were clamped into the tensile testing machine (Zwick Z 020) and pulled apart with a speed of 100 mm/min (test conditions 23°C/50% relative humidity). The tensile strength and elongation at break were determined based on the measured maximum tensile stress.

The values of tensile strength and elongation at break presented in Table 2 have been obtained as an average of five measurements conducted with the same adhesive composition.

### Viscosity at 170°C

The sample adhesive composition provided in a sealed tube was preheated in an oven at a temperature of 180°C for a time period of 20 minutes. After the heating, a sample of 12.3 g of the adhesive composition was weighted and placed in a disposable sleeve to a viscometer. The viscosity was measured at temperature of 170°C at 5 revolutions per minute using a Brookfield DV-2 Thermosel viscometer with a spindle No. 27. The values obtained with 20 minutes of tempering at the measurement temperature and five minutes of measurement were recorded as representative viscosities.

### Heat stability under static load (heat resistance)

The adhesive composition provided in a sealed tube was preheated in an oven at a temperature of 140°C for a time period of 20 minutes. After the heating, a sample of molten adhesive was applied on the surface of a wood specimen (pine) having dimensions of 9 cm x 2 cm x 5 mm and having a 1 mm copper wire on its surface as a spacer. The adhesive was applied as a film having dimensions of 2 cm x 2 cm and a thickness of 1 mm.

Immediately after the application of the adhesive a second wood specimen (pine) having same dimensions as the first wood specimen was positioned on the first wood specimen along the edge of the adhesive film to form a test composite element. The second wood specimen was pressed firmly against the first wood specimen to remove air from adhesive bond. A weigh of 150 g was placed on the top surface of the second wood specimen. Any adhesive squeezed out from the joint was trimmed off with a knife. The test composite elements consisting of bonded wood specimens were then stored for 14 days at standard climatic conditions (23°C, 40-60 % relative humidity).

The test composite elements were then suspended vertically from one end of the first wood specimen on a metal hook and placed in an oven. A metal weight corresponding to a static load of 1 kg was attached to the lower end of the second wood specimen of each composite element. Three composite elements at a time were placed in the oven for the heat stability measurement.

In the heat stability measurement, the oven was first heated to a temperature, which is 40°C below the anticipated adhesive bond failure temperature. The composite elements were kept at this starting temperature for 60 minutes. In case no bond failure occurred, the temperature of the oven was increased by 10°C and the measurement was continued for another 60 minutes. The temperature of the oven was increased in steps of 10 °C following the procedure as described above until a bond failure occurred. The last measured temperature before the bond failure occurred was recorded as the representative heat stability temperature.

The heat resistance values for each adhesive composition presented in Table 2 have been obtained as an average of three measurements conducted with identical test composite elements prepared by using the same adhesive composition.

### Softening point

Softening points of the adhesive compositions were measured by Ring and Ball method according to DIN EN 1238 standard.

### Peel strength

Adhesion to polar and non-polar substrates was examined by measuring peel strengths of composite elements composed of a TPO-foil and a plastic substrate (PVC, ABS, or PP) bonded to each other with the adhesive composition. The TPO-foil had dimensions of 200 mm x 50 mm x 2 mm and the plastic substrate had dimensions of 200 mm x 50 mm x 2 mm. The plastic substrate was cleaned with 2-propanol, dried for at least 10 minutes and stored at temperature of 60 °C before being used for the preparation of the composite elements.

The adhesive composition provided in a sealed tube was preheated in an oven at a temperature of 140 °C for a time period of 20 minutes. After the heating, a sample of 20 g of the molten adhesive was applied with a doctor blade to surface of a silicone paper strip (B700 white, Laufenberg & Sohn KG) placed on a heating plate. The silicone paper had dimensions of 60 cm x 10 cm and the adhesive was applied as a film having a thickness of 100 µm and dimensions of 60 cm x 6 cm. Immediately after the application of the adhesive, the silicone paper strip was removed from the heating plate and the adhesive film was transferred by reactivation onto the surface of the TPO-foil. The silicone paper was then removed and the TPO-foil with the adhesive film on its surface and the plastic substrate were stored 30 seconds at a temperature of 140 °C in an oven.

The TPO-foil and the plastic substrate were removed from the oven, contacted with each other and pressed together by rolling over ten times back and forth using a roller with a weight of 5 kg. The adhesive bonding area had dimensions of 10 cm x 5 cm. The prepared composite elements were stored for 1 hour with a 3 kg load and two weeks without any load at standard climatic conditions (23 °C, relative humidity of 55 %).

The roll peel strengths were measured using a Zwick/Roell Z010 material testing apparatus equipped with a roll-peeling device. The TPO-foil was peeled off from the surface of the plastic substrate at a peeling angle of 90 ° and at a constant cross beam speed of 100 ± 0.1 mm/min. The peeling of the tested substrate was continued until a length of approximately 100 mm of the foil was peeled off. The peel resistance was calculated as average peel force per width of the substrate [N/cm] during peeling over a length of approximately 80 mm. The values for roll peel strength presented in Table 2 have been obtained as average of two measurements conducted with composite elements produced with the same adhesive composition.

**Table 2**

| **Composition [wt.-%]** | **Ref-1** | **Ref-2*** | **Ex-1** | **Ex-2** |
|---|---|---|---|---|
| Reaction product | | | 31.4 | 47.0 |
| P-E wax | | | 18.7 | 28.0 |
| APAO | 100 | | 34.9 | 17.5 |
| PIB | | | 15.0 | 7.5 |
| Tot | 100.0 | | 100.0 | 100.0 |

| **Measured properties** | | | | |
|---|---|---|---|---|
| Open time 500 µm [s] | 30-60 | 120 | 120 | 60 |
| Curing time 500 µm [d] | - | 1 | 7 | 7 |
| Green strength 30 min [MPa] | 0.5 | 0.3 | 0.4 | 0.5 |
| Tensile strenght [MPa] | 1.2 | 9 | 1.5 | 2.6 |
| Elongation at break [%] | 1000 | 500 | 150 | 120 |
| Viscosity at 170 °C [MPa s] | 90000 | 2000 | 43000 | 26000 |
| Heat resistance [°C] | 60 | 160 | 80 | 90 |
| Softening point [°C] | 104 | 70 | 90 | 90 |
| Peel strength 90 ° [N/cm] | | | | |
| PVC | - | 19.8 | 18.5 | 22.5 |
| ABS | - | 18.1 | 23.8 | 21.1 |
| PP | - | 0.2 | 20.7 | 21.3 |

| | | | | |
|---|---|---|---|---|
| *SikaMelt^{®} 9677 composition | | | | |

## Claims

1. An adhesive composition comprising:
a) 5-50 wt.-% of at least one non-functionalized poly-α-olefin **P** and
b) 20 - 70 wt.-% of a reaction product **RP** obtainable by a method comprising steps of reacting at least one first polyol with at least one polyisocyanate wherein the NCO/OH ratio is above 1.5 and reacting the thus obtained reaction mixture with at least one second polyol different from the at least one first polyol, and
c) Optionally at least one at 25 °C liquid polyolefin resin **PR** and
d) Optionally at least one polyolefin wax **PW,** said proportions of a) and b) being based on the total weight of the adhesive composition,
wherein the at least one non-functionalized poly-α-olefin **P** is a non-functionalized amorphous poly-α-olefin and the at least one first polyol is a hydroxyl-terminated polybutadiene.

2. The adhesive composition according to claim 1, wherein the reaction product **RP** is obtainable by a method comprising steps of:
A) Reacting the at least one first polyol with the at least one polyisocyanate wherein the NCO/OH ratio is above 1.5 to obtain a reaction mixture containing an isocyanate-functional polyurethane prepolymer and unconverted polyisocyanate, and
B) Adding to the reaction mixture obtained in step A) at least one second polyol different from the at least one first polyol and carrying out the reaction wherein the NCO/OH-ratio is above 2.5 to give the reaction product **RP.**

3. The adhesive composition according to claim 1 or 2, wherein the at least one non-functionalized poly-α-olefin **P** is a at 25 °C solid non-functionalized amorphous poly-α-olefin, preferably having a number average molecular weight (Mₙ) in the range of 1'500 - 50'000 g/mol and/or a softening point measured by Ring and Ball method according to DIN EN 1238 in the range of 60 - 180 °C and/or a xylene cold soluble content (XCS) determined at 25 °C according ISO 16152-2005 standard of at least 80 wt.-%.

4. The adhesive composition according to any one of previous claims, wherein the at least one first polyol is a hydroxyl-terminated polybutadiene having a number average molecular weight (Mₙ) of 1'000 - 7'500 g/mol and/or an average hydroxyl (OH) functionality of 1.7 - 2.9 and/or a vinyl content in the range of 40 - 75 wt.-% and/or a 1,4-cis content in the range of 2.5 - 25 wt.-% and/or a 1,4-trans content in the range of 10 - 35 wt.-%, based on the weight of the hydroxyl-terminated polybutadiene.

5. The adhesive composition according to any one of previous claims, wherein the at least one first polyol is a at 25 °C liquid linear hydroxyl-terminated polybutadiene, preferably a at 25 °C liquid linear non-hydrogenated hydroxyl-terminated polybutadiene.

6. The adhesive composition according to any one of previous claims, wherein the at least one polyisocyanate is a diisocyanate, preferably a monomeric diisocyanate, preferably having a number average molecular weight (Mₙ) of not more than 1'000 g/mol, preferably not more than 500 g/mol.

7. The adhesive composition according to any one of previous claims, wherein the at least one second polyol is selected from the group consisting of amorphous, partially crystalline, and crystalline polyester polyols, which are solid at a temperature of 25 °C.

8. The adhesive composition according to any one of claims 2-7, wherein the NCO/OH ratio in step A) is in the range from 1.5 to 2.5, preferably from 1.7 to 2.2 and/or the NCO/OH ratio in step B) is in the range from 3 to 20, preferably in the range from 3 to 10.

9. The adhesive composition according to any one of claims 2-8, wherein the amount of unconverted polyisocyanate in the reaction mixture obtained in step A) is 1.5 - 5 wt.-%, preferably 2-4 wt.-%, based on the total weight of the reaction mixture.

10. The adhesive composition according to any one of previous claims, wherein the at least one at 25 °C liquid polyolefin resin **PR** is present in the adhesive composition in an amount of 1 - 30 wt.-%, preferably 5-25 wt.-%, based on the total weight of the adhesive composition.

11. The adhesive composition according to claim 10, wherein the at least one at 25 °C liquid polyolefin resin **PR** has a number average molecular weight (Mₙ) in the range of 500 - 5'000 g/mol and/or a pour point determined according to ISO 3016 standard in the range of -10 to +15 °C.

12. The adhesive composition according to claim 10 or 11, wherein the at least one at 25 °C liquid polyolefin resin **PR** is a at 25 °C liquid polyisobutylene.

13. The adhesive composition according to any one of previous claims, wherein the at least one polyolefin wax **PW** is present in the adhesive composition in an amount of 5 - 40 wt.-%, preferably 10 - 35 wt.-%, based on the total weight of the adhesive composition.

14. The adhesive composition according to claim 13, wherein the at least one polyolefin wax **PW** has a softening point measured by Ring and Ball method according to DIN EN 1238 of not more than 140 °C, preferably not more than 120 °C and/or a melt viscosity measured according to DIN 53019 standard at 170 °C in the range of 10 - 10'000 MPa s, preferably 750 - 7'500 MPa s.

15. A method for producing an adhesive composition as defined in any one of claims 1-14 comprising mixing the at least one non-functionalized poly α-olefin **P** and the reaction product **RP** with each other.

16. Use of the adhesive composition according to any one of claims 1-14 as an assembly adhesive, laminating adhesive, or as an adhesive for the building of sandwich elements.

17. A method for adhesively bonding a first substrate to a second substrate, the method comprising steps of:
I) Heating an adhesive composition according to any one of claims 1-14 to provide a melted adhesive composition,
II) Applying the melted adhesive composition to a surface of the first substrate to form an adhesive film,
III) Contacting the adhesive film with a surface of the second substrate, and
IV) Chemically curing the adhesive film with water, in particular with atmospheric moisture.

18. The method according to claim 17, wherein one of the first and the second substrates is composed of a polar material, wherein the other substrate is composed of a non-polar material.

## Patentansprüche

1. Klebstoffzusammensetzung, umfassend:
a) 5-50 Gew.-% mindestens eines nicht funktionalisierten Poly-α-olefins **P** und
b) 20-70 Gew.-% eines Reaktionsprodukts **RP,** das durch ein Verfahren erhältlich ist, das die Schritte des Umsetzens von mindestens einem ersten Polyol mit mindestens einem Polyisocyanat, wobei das NCO/OH-Verhältnis über 1,5 liegt, und Umsetzen der so erhaltenen Reaktionsmischung mit mindestens einem zweiten Polyol, das von dem mindestens einen ersten Polyol verschieden ist, umfasst, und
c) gegebenenfalls mindestens ein bei 25 °C flüssiges Polyolefinharz **PR** und
d) gegebenenfalls mindestens ein Polyolefinwachs **PW,** wobei sich die Anteile von a) und b) auf das Gesamtgewicht der Klebstoffzusammensetzung beziehen,
wobei es sich bei dem mindestens einen nicht funktionalisierten Poly-α-olefin **P** um ein nicht funktionalisiertes amorphes Poly-α-olefin handelt und es sich bei dem mindestens einen ersten Polyol um ein hydroxylterminiertes Polybutadien handelt.

2. Klebstoffzusammensetzung nach Anspruch 1, wobei das Reaktionsprodukt **RP** durch ein Verfahren erhältlich ist, das folgende Schritte umfasst:
A) Umsetzen des mindestens einen ersten Polyols mit dem mindestens einen Polyisocyanat, wobei das NCO/OH-Verhältnis über 1,5 liegt, unter Erhalt einer Reaktionsmischung, die ein isocyanatfunktionelles Polyurethan-Prepolymer und nicht umgesetztes Polyisocyanat enthält, und
B) Zugeben von mindestens einem zweiten Polyol, das von dem mindestens einen ersten Polyol verschieden ist, zu der in Schritt A) erhaltenen Reaktionsmischung und Durchführen der Umsetzung, wobei das NCO/OH-Verhältnis über 2,5 liegt, unter Erhalt des Reaktionsprodukts **RP.**

3. Klebstoffzusammensetzung nach Anspruch 1 oder 2, wobei es sich bei dem mindestens einen nicht funktionalisierten Poly-α-olefin **P** um ein bei 25 °C festes nicht funktionalisiertes amorphes Poly-α-olefin handelt, vorzugsweise mit einem zahlenmittleren Molekulargewicht (Mₙ) im Bereich von 1500-50.000 g/mol und/oder einem nach der Ring-und-Kugel-Methode gemäß DIN EN 1238 gemessenen Erweichungspunkt im Bereich von 60-180 °C und/oder einem gemäß der ISO-Norm 16152-2005 bei 25 °C bestimmten in kaltem Xylol löslichen Anteil (XCS) von mindestens 80 Gew.-%.

4. Klebstoffzusammensetzung nach einem der vorhergehenden Ansprüche, wobei es sich bei dem mindestens einen ersten Polyol um ein hydroxylterminiertes Polybutadien mit einem zahlenmittleren Molekular-gewicht (Mₙ) von 1000-7500 g/mol und/oder einer durchschnittlichen Hydroxyl(OH)-Funktionalität von 1,7-2,9 und/oder einem Vinylgehalt im Bereich von 40-75 Gew.-% und/oder einem 1,4-cis-Gehalt im Bereich von 2,5-25 Gew.-% und/oder einem 1,4-trans-Gehalt im Bereich von 10-35 Gew.-%, bezogen auf das Gewicht des hydroxylterminierten Polybutadiens, handelt.

5. Klebstoffzusammensetzung nach einem der vorhergehenden Ansprüche, wobei es sich bei dem mindestens einen ersten Polyol um ein bei 25 °C flüssiges lineares hydroxylterminiertes Polybutadien, vorzugsweise ein bei 25 °C flüssiges lineares nicht hydriertes hydroxylterminiertes Polybutadien handelt.

6. Klebstoffzusammensetzung nach einem der vorhergehenden Ansprüche, wobei es sich bei dem mindestens einen Polyisocyanat um ein Diisocyanat, vorzugsweise ein monomeres Diisocyanat, vorzugsweise mit einem zahlenmittleren Molekulargewicht (Mₙ) von nicht mehr als 1000 g/mol, vorzugsweise nicht mehr als 500 g/mol, handelt.

7. Klebstoffzusammensetzung nach einem der vorhergehenden Ansprüche, wobei das mindestens eine zweite Polyol aus der Gruppe bestehend aus amorphen, teilkristallinen und kristallinen Polyesterpolyolen, die bei einer Temperatur von 25 °C fest sind, ausgewählt ist.

8. Klebstoffzusammensetzung nach einem der Ansprüche 2-7, wobei das NCO/OH-Verhältnis in Schritt A) im Bereich von 1,5 bis 2,5, vorzugsweise von 1,7 bis 2,2, liegt und/oder das NCO/OH-Verhältnis in Schritt B) im Bereich von 3 bis 20, vorzugsweise im Bereich von 3 bis 10, liegt.

9. Klebstoffzusammensetzung nach einem der Ansprüche 2-8, wobei die Menge an nichtumgesetztem Polyisocyanat in der in Schritt A) erhaltenen Reaktionsmischung 1,5-5 Gew.-%, vorzugsweise 2-4 Gew.-%, bezogen auf das Gesamtgewicht der Reaktionsmischung, beträgt.

10. Klebstoffzusammensetzung nach einem der vorhergehenden Ansprüche, wobei das mindestens eine bei 25 °C flüssiges Polyolefinharz **PR** in der Klebstoffzusammensetzung in einer Menge von 1-30 Gew.-%, vorzugsweise 5-25 Gew.-%, bezogen auf das Gesamtgewicht der Klebstoffzusammensetzung, vorliegt.

11. Klebstoffzusammensetzung nach Anspruch 10, wobei das mindestens eine bei 25 °C flüssige Polyolefinharz **PR** ein zahlenmittleres Molekulargewicht (Mₙ) im Bereich von 500-5000 g/mol und/oder einen gemäß ISO-Norm 3016 bestimmten Pourpoint im Bereich von -10 bis +15 °C aufweist.

12. Klebstoffzusammensetzung nach Anspruch 10 oder 11, wobei es sich bei dem mindestens einen bei 25 °C flüssigen Polyolefinharz **PR** um ein bei 25 °C flüssiges Polyisobutylen handelt.

13. Klebstoffzusammensetzung nach einem der vorhergehenden Ansprüche, wobei das mindestens eine Polyolefinwachs **PW** in der Klebstoffzusammensetzung in einer Menge von 5-40 Gew.-%, vorzugsweise 10-35 Gew.-%, bezogen auf das Gesamtgewicht der Klebstoffzusammensetzung, vorliegt.

14. Klebstoffzusammensetzung nach Anspruch 13, wobei das mindestens eine Polyolefinwachs **PW** einen nach der Ring-und-Kugel-Methode gemäß DIN EN 1238 gemessenen Erweichungspunkt von nicht mehr als 140 °C, vorzugsweise nicht mehr als 120 °C, und/oder eine gemäß der DIN-Norm 53019 gemessene Schmelzeviskosität bei 170 °C im Bereich von 10-10.000 MPa·s, vorzugsweise 750-7500 MPa·s, aufweist.

15. Verfahren zur Herstellung einer Klebstoffzusammensetzung gemäß einem der Ansprüche 1-14, umfassend das Mischen des mindestens einen nicht funktionalisierten Poly-α-olefins **P** und des Reaktionsprodukts **RP** miteinander.

16. Verwendung der Klebstoffzusammensetzung nach einem der Ansprüche 1-14 als Montageklebstoff, Kaschierklebstoff oder als Klebstoff zum Aufbau von Sandwichelementen.

17. Verfahren zur Verklebung eines ersten Substrats mit einem zweiten Substrat, wobei das Verfahren folgende Schritte umfasst:
I) Erhitzen einer Klebstoffzusammensetzung nach einem der Ansprüche 1-14 zur Bereitstellung einer geschmolzenen Klebstoffzusammensetzung,
II) Aufbringen der geschmolzenen Klebstoffzusammensetzung auf eine Oberfläche des ersten Substrats zur Bildung eines Klebstofffilms,
III) Kontaktieren des Klebstofffilms mit einer Oberfläche des zweiten Substrats und
IV) chemisches Härten des Klebstofffilms mit Wasser, insbesondere mit Luftfeuchtigkeit.

18. Verfahren nach Anspruch 17, wobei das erste Substrat oder das zweite Substrat aus einem polaren Material besteht, wobei das andere Substrat aus einem unpolaren Material besteht.

## Revendications

1. Composition d'adhésif comprenant :
a) 5 à 50 % en poids d'au moins une poly-α-oléfine non fonctionnalisée P et
b) 20 à 70 % en poids d'un produit de réaction RP pouvant être obtenu par un procédé comprenant des étapes de mise en réaction d'au moins un premier polyol avec au moins un polyisocyanate, le rapport NCO/OH étant supérieur à 1,5 et mise en réaction du mélange réactionnel ainsi obtenu avec au moins un deuxième polyol différent de l'au moins un premier polyol, et
c) éventuellement au moins une résine de polyoléfine PR liquide à 25 °C et
d) éventuellement au moins une cire de polyoléfine PW, lesdites proportions de a) et b) étant basées sur le poids total de la composition d'adhésif,
l'au moins une poly-α-oléfine non fonctionnalisée P étant une poly-α-oléfine amorphe non fonctionnalisée et l'au moins un premier polyol étant un polybutadiène terminé par hydroxyle.

2. Composition d'adhésif selon la revendication 1, le produit de réaction RP pouvant être obtenu par un procédé comprenant des étapes de :
A) mise en réaction de l'au moins un premier polyol avec l'au moins un polyisocyanate, le rapport NCO/OH étant supérieur à 1,5 pour obtenir un mélange réactionnel contenant un prépolymère de polyuréthane fonctionnalisé par isocyanate et du polyisocyanate n'ayant pas été converti, et
B) ajout, au mélange réactionnel obtenu dans l'étape A), d'au moins un deuxième polyol différent de l'au moins un premier polyol et mise en œuvre de la réaction, le rapport NCO/OH étant supérieur à 2,5 pour donner le produit de réaction RP.

3. Composition d'adhésif selon la revendication 1 ou 2, l'au moins une poly-α-oléfine non fonctionnalisée P étant une poly-α-oléfine amorphe non fonctionnalisée solide à 25 °C, préférablement possédant un poids moléculaire moyen en nombre (Mₙ) dans la plage de 1 500 à 50 000 g/mole et/ou un point de ramollissement mesuré par le procédé à anneau et à bille selon la norme DIN EN 1238 dans la plage de 60 à 180 °C et/ou une teneur en matière soluble dans le xylène froid (XCS) déterminée à 25 °C selon la norme ISO 16152-2005 d'au moins 80 % en poids.

4. Composition d'adhésif selon l'une quelconque des revendications précédentes, l'au moins un premier polyol étant un polybutadiène terminé par hydroxyle possédant un poids moléculaire moyen en nombre (Mₙ) de 1 000 à 7 500 g/mole et/ou une fonctionnalité d'hydroxyle (OH) moyenne de 1,7 à 2,9 et/ou une teneur en vinyle dans la plage de 40 à 75 % en poids et/ou une teneur en 1,4-cis dans la plage de 2,5 à 25 % en poids et/ou une teneur en 1,4-trans dans la plage de 10 à 35 % en poids, sur la base du poids du polybutadiène terminé par hydroxyle.

5. Composition d'adhésif selon l'une quelconque des revendications précédentes, l'au moins un premier polyol étant un polybutadiène terminé par hydroxyle linéaire liquide à 25 °C, préférablement un polybutadiène terminé par hydroxyle non hydrogéné linéaire liquide à 25 °C.

6. Composition d'adhésif selon l'une quelconque des revendications précédentes, l'au moins un polyisocyanate étant un diisocyanate, préférablement un diisocyanate monomérique, préférablement possédant un poids moléculaire moyen en nombre (Mₙ) de pas plus de 1 000 g/mole, préférablement de pas plus de 500 g/mole.

7. Composition d'adhésif selon l'une quelconque des revendications précédentes, l'au moins un deuxième polyol étant choisi dans le groupe constitué par des polyester polyols amorphes, partiellement cristallins et cristallins, qui sont solides à une température de 25 °C.

8. Composition d'adhésif selon l'une quelconque des revendications 2 à 7, le rapport NCO/OH dans l'étape A) étant dans la plage de 1,5 à 2,5, préférablement de 1,7 à 2, 2 et/ou le rapport NCO/OH dans l'étape B) étant dans la plage de 3 à 20, préférablement dans la plage de 3 à 10.

9. Composition d'adhésif selon l'une quelconque des revendications 2 à 8, la quantité de polyisocyanate n'ayant pas été converti dans le mélange réactionnel obtenu dans l'étape A) étant de 1,5 à 5 % en poids, préférablement de 2 à 4 % en poids, sur la base du poids total du mélange réactionnel.

10. Composition d'adhésif selon l'une quelconque des revendications précédentes, l'au moins une résine de polyoléfine PR liquide à 25 °C étant présente dans la composition d'adhésif en une quantité de 1 à 30 % en poids, préférablement de 5 à 25 % en poids, sur la base du poids total de la composition d'adhésif.

11. Composition d'adhésif selon la revendication 10, l'au moins une résine de polyoléfine PR liquide à 25 °C possédant un poids moléculaire moyen en nombre (Mₙ) dans la plage de 500 à 5 000 g/mole et/ou un point d'écoulement déterminé selon la norme ISO 3016 dans la plage de -10 à +15 °C.

12. Composition d'adhésif selon la revendication 10 ou 11, l'au moins une résine de polyoléfine PR liquide à 25 °C étant un polyisobutylène liquide à 25 °C.

13. Composition d'adhésif selon l'une quelconque des revendications précédentes, l'au moins une cire de polyoléfine PW étant présente dans la composition d'adhésif en une quantité de 5 à 40 % en poids, préférablement de 10 à 35 % en poids, sur la base du poids total de la composition d'adhésif.

14. Composition d'adhésif selon la revendication 13, l'au moins une cire de polyoléfine PW possédant un point de ramollissement mesuré par le procédé à anneau et à bille selon la norme DIN EN 1238 de pas plus de 140 °C, préférablement de pas plus de 120 °C et/ou une viscosité à l'état fondu mesurée selon la norme DIN 53019 à 170 °C dans la plage de 10 à 10 000 MPa·s, préférablement de 750 à 7500 MPa·s.

15. Procédé pour la production d'une composition d'adhésif telle que définie dans l'une quelconque des revendications 1 à 14 comprenant le mélange de l'au moins une poly-α-oléfine non fonctionnalisée P et du produit de réaction RP l'une avec l'autre.

16. Utilisation de la composition d'adhésif selon l'une quelconque des revendications 1 à 14 en tant qu'adhésif d'assemblage, adhésif de stratification, ou en tant qu'adhésif pour la construction d'éléments en sandwich.

17. Procédé pour la liaison de manière adhésive d'un premier substrat à un deuxième substrat, le procédé comprenant les étapes de :
I) chauffage d'une composition d'adhésif selon l'une quelconque des revendications 1 à 14 pour fournir une composition d'adhésif fondue,
II) application de la composition d'adhésif fondue sur une surface du premier substrat pour former un film d'adhésif,
III) mise en contact du film d'adhésif avec une surface du deuxième substrat, et
IV) durcissement de manière chimique du film d'adhésif avec de l'eau, en particulier avec de l'humidité atmosphérique.

18. Procédé selon la revendication 17, l'un parmi le premier et le deuxième substrat étant composé d'un matériau polaire, l'autre substrat étant composé d'un matériau non polaire.
